(19) Europäisches Patentamt
European Patent Office
Office européen des brevets

(11) **EP 4 099 706 A1**

(12) **EUROPEAN PATENT APPLICATION**

(43) Date of publication:
**07.12.2022 Bulletin 2022/49**

(21) Application number: **22160890.4**

(22) Date of filing: **08.03.2022**

(51) International Patent Classification (IPC):
***H04N 21/2187*** (2011.01)

(52) Cooperative Patent Classification (CPC):
**H04N 21/21805; G06Q 20/085; H04N 21/2187;
H04N 21/2543; H04N 21/2743; H04N 21/4784;
H04N 21/4788**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 CN 202110605068**

(71) Applicant: **Beijing Dajia Internet Information
Technology Co., Ltd.
Beijing 100085 (CN)**

(72) Inventor: **TANG, Ye
Beijing, 100085 (CN)**

(74) Representative: **Yang, Shu
Withers & Rogers LLP
2 London Bridge
London SE1 9RA (GB)**

(54) **METHOD AND APPARATUS FOR ALLOCATING RESOURCES**

(57) A method for allocating resources is provided, and belongs to the technical field of computers. The method includes acquiring (201) resource allocation weights corresponding to a plurality of first user accounts in a virtual space; generating (202) a first resource quantity corresponding to each of the first user accounts by dividing a target resource quantity corresponding to the virtual space based on the resource allocation weights corresponding to the plurality of first user accounts; and allocating (203), based on the first resource quantity corresponding to each of the first user accounts, the resources of the target resource quantity to the plurality of first user accounts. The first user accounts are configured to publish live-streaming data into the virtual space for co-hosting.

FIG. 4

**Description**

**TECHNICAL FIELD**

The present disclosure relates to the technical field of computers, and in particular, to a method and an apparatus for allocating resources.

**BACKGROUND**

With the development of computer technologies, the live-streaming function is increasingly popular among users. To enrich displayed live-streaming data, live-streaming data of a plurality of first user accounts is published into one live-streaming room, so as to realize the effect of co-hosting by the plurality of first user accounts. Usually, when watching the live-streaming data in the live-streaming room, the user of a second user account presents a resource to the live-streaming room, such as a gift or money. In the case of co-hosting, how to realize resource allocation among the plurality of first user accounts is an urgent problem to be resolved.

**SUMMARY**

The present disclosure provides a method and an apparatus for allocating resources.

According to one aspect of embodiments of the present disclosure, a method for allocating resources is provided, including: acquiring resource allocation weights corresponding to a plurality of first user accounts in a virtual space, wherein the resource allocation weight indicates a contribution degree of virtual-space behaviors of the first user accounts to the virtual space; generating a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and allocating, based on the first resource quantity corresponding to each of the first user accounts, the resources of the target resource quantity to the plurality of first user accounts.

According to another aspect of the embodiments of the present disclosure, a method for allocating resources is provided, including: determining, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and reporting the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

According to still another aspect of the embodiments of the present disclosure, an apparatus for allocating resources is provided, including: an acquiring unit, configured to acquire resource allocation weights corresponding to a plurality of first user accounts in a virtual space, wherein the resource allocation weight indicates a contribution degree of virtual-space behaviors of the first user accounts to the virtual space; a dividing unit, configured to generate a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and an allocating unit, configured to allocate, based on the first resource quantity corresponding to each of the first user accounts, the resources of the target resource quantity to the plurality of first user accounts.

According to still another aspect of the embodiments of the present disclosure, an apparatus for allocating resources is provided, including: a determining unit, configured to determine, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and a reporting unit, configured to report the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

According to still another aspect of the embodiments of the present disclosure, an electronic device is provided, including: at least one processor; and a volatile or nonvolatile memory configured to store at least one instruction executable by the at least one processor, wherein the at least one processor, when executing the at least one instruction, is caused to perform: acquiring resource allocation weights corresponding to a plurality of first user accounts in a virtual space, wherein the resource allocation weight indicates a contribution degree of virtual-space behaviors of the first user accounts to the virtual space; generating a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and allocating, based on the first resource quantity corresponding to each of the first user accounts, the resources of the target resource quantity to the plurality of first user accounts; or the at least one processor, when executing the at least one instruction, is caused to perform: determining, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and reporting the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

According to still another aspect of the embodiments of the present disclosure, a non-transitory computer-readable storage medium storing at least one instruction therein is provided. The at least one instruction, when executed by a processor of an electronic device, causes the electronic device to perform: acquiring resource allocation weights corresponding to a plurality of first user accounts in a virtual space, wherein the resource allocation weight indicates a contribution degree of virtual-space behaviors of the first user accounts to the virtual space; generating a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and allocating, based on the first resource quantity corresponding to each of the first user accounts, the resources of the target resource quantity to the plurality of first user accounts; or the at least one instruction, when executed by a processor of an electronic device, causes the electronic device to perform: determining, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and reporting the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

**BRIEF DESCRIPTION OF THE DRAWINGS**

FIG. 1 is a schematic diagram of an implementation environment according to some embodiments of the present disclosure;
FIG. 2 is a flowchart of a method for allocating resources according to some embodiments of the present disclosure;
FIG. 3 is a flowchart of another method for allocating resources according to some embodiments of the present disclosure;
FIG. 4 is a flowchart of still another method for allocating resources according to some embodiments of the present disclosure;
FIG. 5 is a schematic diagram of starting and ending live-streaming by a live streamer according to some embodiments of the present disclosure;
FIG. 6 is a flowchart of yet another method for allocating resources according to some embodiments of the present disclosure;
FIG. 7 is a block diagram of an apparatus for allocating resources according to some embodiments of the present disclosure;
FIG. 8 is a block diagram of another apparatus for allocating resources according to some embodiments of the present disclosure;
FIG. 9 is a block diagram of still another apparatus for allocating resources according to some embodiments of the present disclosure;

FIG. 10 is a block diagram of a terminal according to some embodiments of the present disclosure; and
FIG. 11 is a block diagram of a server according to some embodiments of the present disclosure.

**DETAILED DESCRIPTION**

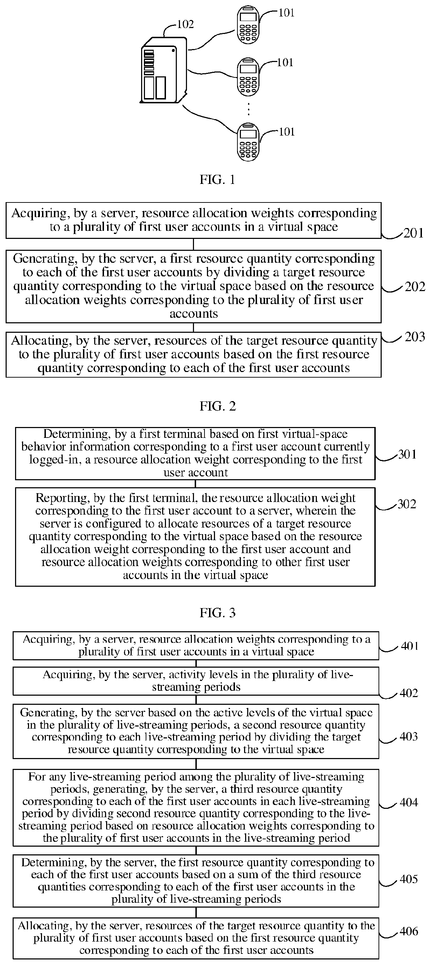

FIG. 1 is a schematic diagram of an implementation environment according to some embodiments of the present disclosure. The implementation environment includes a plurality of first terminals 101 and a server 102. A network connection is established between the plurality of first terminals 101 and the server 102, and the plurality of first terminals 101 each can interact with the server 102 over the network.

In some embodiments, the first terminal is a mobile phone, a tablet computer, a computer, or the like. In some embodiments, the server is one server, or a server cluster consisting of a plurality of servers, or a cloud computing service center.

In some embodiments, a live-streaming application is installed on each of the first terminals 101, and the server 102 is capable of providing services for the live-streaming application. Each first terminal 101 can realize data transmission, message exchange, and other functions through the installed live-streaming application. The live-streaming application has a live-streaming function. The live-streaming application can also have other functions, such as a shopping function, a game function, and a commenting function.

The server 102 creates an identical live-streaming room for a plurality of first user accounts logged in with the plurality of first terminals 101. Each first terminal 101 logs in to the live-streaming application based on one first user account, uploads acquired live-streaming data to the server 102 through the live-streaming application. The server 102 receives the live-streaming data uploaded by each first terminal 101, publishes the received live-streaming data into the live-streaming room corresponding to the plurality of first terminals 101, such that each audience's terminal accessing the live-streaming room can acquire a plurality of live-streaming data published into the live-streaming room and display the received live-streaming data through the live-streaming application. In addition, in a process in which the audience's terminal displays the live-streaming data in the live-streaming room, the audience's terminal sends resources to the live-streaming room, and the server 102 receives the resources posted by a second user account in the live-streaming room and allocates the received resources to the plurality of first user accounts in the live-streaming room.

In some embodiments, during live-streaming, each first terminal101 acquires a resource allocation weight corresponding to the first user account and reports the resource allocation weight to the server 102. Upon completion of the live-streaming in a virtual space, the server 102 allocates resources of the target resource quantity in the virtual space based on the resource allocation weight corresponding to each first user account, to realize allocation based on an amount of contribution done by individual first user account, thereby ensuring the reasonable and accurate resource allocation.

As discussed above, a plurality of live streamers (anchors) may participate in the live-streaming process or a virtual space, and an audience in the live-streaming room may send resources to the live-streaming room. During the live-streaming, the live streamers may perform various actions. In response, an audience may interact and send resources as rewards to the live streamers. For example, the resource may include the resources like giving a like, posting comments, or posting money. While a plurality of live streamers are present in the virtual space, the audience may send the resources without specifying to which live streamer the resources should go. In this circumstance, the resources need to be allocated. Because the live-streaming is dynamic and various types of actions and interactions are being performed, it is challenging to quantify these interactions to reflect the contributions of the plurality of live streamers to the live-streaming room.

FIG. 2 is a flowchart of a method for allocating resources according to some embodiments of the present disclosure. As shown in FIG. 2, the method for allocating resources is executed by a server, and includes the following processes.

In 201, the server acquires resource allocation weights corresponding to a plurality of first user accounts in a virtual space. The resource may be "like" or comments, gift or money given by the viewers/audience or any form of rewards posted by the viewers/audience in the virtual space.

The resource allocation weight indicates a contribution degree of virtual-space behaviors of the first user accounts to the virtual space. In the embodiment of the present disclosure, the plurality of first user accounts are configured to publish live-streaming data into the virtual space, to realize co-hosting. The plurality of first user accounts send live-streaming data to the server by the corresponding terminal, and the server delivers the live-streaming data and enables display of the live-streaming data in the live-streaming room for co-hosting. During the co-hosting process, the second user account accesses the virtual space. When watching the live-streaming data in the virtual space, the second user account is interacted with the first user account in the virtual space.

In 202, the server generates a first resource quantity corresponding to each of the first user accounts by dividing a target resource quantity corresponding to the virtual space based on the resource allocation weights corresponding to the plurality of first user accounts.

The target resource quantity is a quantity of resources posted by the second user accounts in the virtual space, and the first resource quantity corresponding to each of the first user accounts represents a quantity of resources that need to be allocated to each first user account. The target resource quantity is divided based on the resource allocation weight corresponding to each first user account, to ensure that a first user account with a larger contribution degree corresponds to a larger first resource quantity, thereby realizing allocation according to the work done by the first user account or by labor and ensuring the fairness of resource allocation.

In 203, the server allocates the resources of the target resource quantity to the plurality of first user accounts based on the first resource quantity corresponding to each of the first user accounts.

The first resource quantity corresponding to each of the first user accounts is the quantity of resources that need to be allocated to each first user account. Based on the first resource quantity corresponding to each of the first user accounts, the resources of the first resource quantity are allocated to the corresponding first user account to ensure accuracy of resource allocation.

According to the method provided by the embodiments of the present disclosure, the resources posted by the second user account in the virtual space are allocated based on the resource allocation weights corresponding to the plurality of first user accounts in the case of the co-hosting. That is, the resources posted by the second user account in the virtual space are allocated based on the interaction between the first user accounts and the second user accounts in the virtual space, thereby realizing allocation by labor and ensuring the accuracy of resource allocation.

FIG. 3 is a flowchart of a method for allocating resources according to some embodiments of the present disclosure. As shown in FIG. 3, the method for allocating resources is executed by a first terminal, and includes the following processes.

In 301, the first terminal determines, based on first behavior information corresponding to a first user account currently logged-in, a resource allocation weight corresponding to the first user account.

The first behavior information describes an interactive operation between the first user account and second user accounts in a virtual space. The resource allocation weight indicates a contribution degree of virtual-space behaviors of the first user account to the virtual space.

In 302, the first terminal reports the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space.

The target resource quantity is a quantity of resources posted by the second user accounts in the virtual space. The server allocates the resources based on the resource allocation weights corresponding to the first user accounts, to ensure that resources of a larger quantity are allocated to a first user account with a larger contribution degree, thereby realizing allocation by labor and ensuring the fairness of resource allocation.

According to the method provided by the embodiments of the present disclosure, the resources posted by the second user account in the virtual space are allocated based on the resource allocation weights corresponding to the plurality of first user accounts in the case of the co-hosting. That is, the resources posted by the second user account in the virtual space are allocated based on the interaction between the first user accounts and the second user accounts in the virtual space, thereby realizing allocation by labor and ensuring the accuracy of resource allocation.

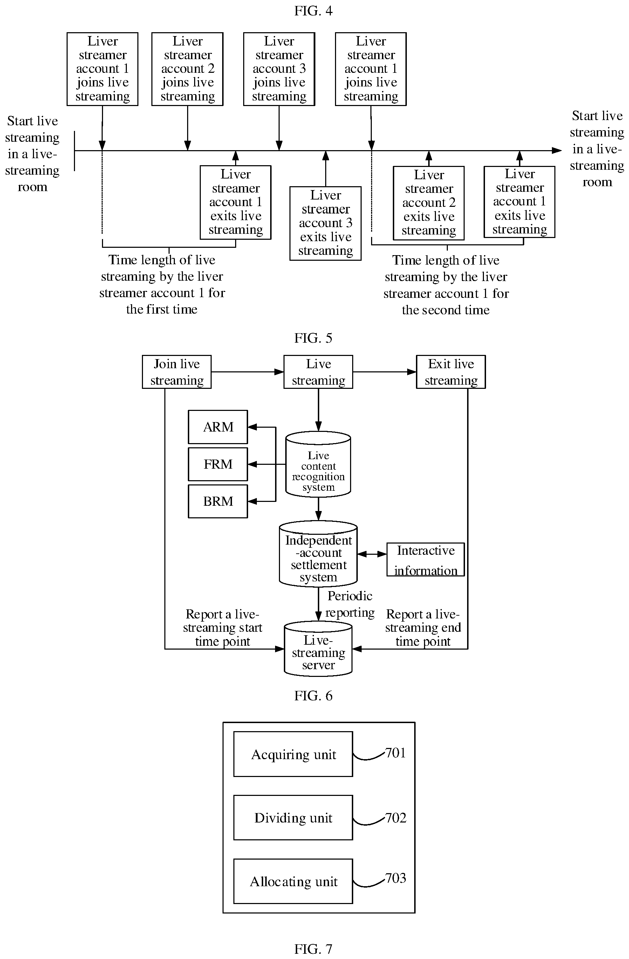

FIG. 4 is a flowchart of a method for allocating resources according to some embodiments of the present disclosure. As shown in FIG. 4, the method for allocating resources is executed by a server and includes the following processes.

In 401, the server acquires resource allocation weights corresponding to a plurality of first user accounts in a virtual space.

The virtual space is configured to indicate a live-streaming room or refers to a live-streaming room, the first user account is configured to represent a live streamer account in the live-streaming room or is a live streamer account, and the first user account has permission to publish multimedia data in the virtual space. The resource allocation weights indicate contribution degree of virtual-space behaviors of the first user accounts to the virtual space, and the virtual-space behaviors include interactive behaviors between the first user accounts and the second user accounts. The resource allocation weight corresponding to the first user account is configured to allocate virtual resources in the virtual space. A larger resource allocation weight indicates a larger contribution degree of the first user account to the virtual space and more resources are allocated to the first user account, and a smaller resource allocation weight indicates a smaller contribution degree of the first user account to the virtual space and less resources are allocated to the first user account. For example, the resource allocation weights are positively correlated with the online hours of the first user account.

In the embodiment of the present disclosure, the plurality of first user accounts are configured to publish live-streaming data into the virtual space, to realize co-hosting. During the co-hosting process, the second user account accesses the virtual space. When watching the live-streaming data in the virtual space, the second user account is interacted with the first user account in the virtual space. A resource allocation weight corresponding to any first user account is configured to represent an interaction between the first user account and the second user accounts in the virtual space.

In some embodiments, 401 may be implemented in the following four fashions.

In a first manner, 401 includes 4011 to 4013.

In 4011, for any first user account and any live-streaming period, the server determines a live-streaming type of the live-streaming data published by the first user account into the virtual space in the live-streaming period.

In the embodiment of the present disclosure, the virtual space corresponds to the plurality of live-streaming periods, and the plurality of live-streaming periods can represent a whole period from the start of live-streaming to the end of live-streaming in the virtual space. In some embodiments, the plurality of live-streaming periods may be identical. For example, the whole period from the start of live-streaming to the end of live-streaming in the virtual space is 60 minutes, and the length of each live-streaming period is 15 minutes, that is, the virtual space corresponds to four live-streaming periods.

In the plurality of live-streaming periods, the plurality of first user accounts publishes the live-streaming data in the virtual space. For any first user account among the plurality of first user accounts, in the case that the first user account publishes the live-streaming data in the virtual space, the live-streaming data published by the first user account in any live-streaming period, namely, a live-streaming data segment of the live-streaming data published by the first user account into the virtual space, can be determined based on the plurality of live-streaming periods corresponding to the virtual space. The live-streaming data segment corresponds to the live-streaming period. For example, a start time point of the live-streaming data segment is the same as a start time point of the live-streaming period, and an end time point of the live-streaming data segment is the same as an end time point of the live-streaming period.

The live-streaming type indicates a type of content contained in the corresponding live-streaming data. In some embodiments, the live-streaming type includes dancing type, singing type, speaking type, and the like. For example, in response to any piece of live-streaming data containing an image of dancing by a live streamer, the live-streaming type of the live-streaming data is dancing, or in response to the live-streaming data containing an image of singing by the live streamer, the live-streaming type of the live-streaming data is singing.

The live-streaming type of the live-streaming data published by the first user account into the virtual space in the live-streaming period is a live-streaming type of a live-streaming data segment corresponding to the live-streaming period in the live-streaming data corresponding to the first user account.

In some embodiments, 4011 includes determining the live-streaming type of the live-streaming data published by the first user account into the virtual space in the live-streaming period by recognizing content of the live-streaming data published by the first user account into the virtual space in the live-streaming period.

The live-streaming type of the live-streaming data published by the first user account into the virtual space in the live-streaming period is determined through content recognition, to ensure accuracy of the live-streaming type.

For example, for the live-streaming data corresponding to the first user account, that is, the live-streaming data published by the first user account into the virtual space, the live-streaming data segment corresponding to the live-streaming period is determined. The live-streaming type of the live-streaming data segment, that is, the live-streaming type of the live-streaming data published by the first user account within the live-streaming period, is determined by recognizing content of the live-streaming data segment.

In a possible implementation of the embodiment, the content of the live-streaming data published by the first user account into the virtual space in the live-streaming period is recognized based on a content recognition model to determine the live-streaming type of the live-streaming data published by the first user account into the virtual space in the live-streaming period.

The content recognition model is configured to recognize the live-streaming type of the live-streaming data. For example, the content recognition model is provided as a live discern system (LDS).

For example, the content recognition model includes an audio recognition model (ARM). Content of audio data in the live-streaming data corresponding to the first user account in the live-streaming period is analyzed based on the ARM to determine whether the live streamer is speaking so as to determine whether the live-streaming data corresponding to the first user account in the live-streaming period is speaking type. Or, the content recognition model includes a face recognition model (FRM). The content of the live-streaming data corresponding to the first user account in the live-streaming period is analyzed based on the FRM to determine whether the live streamer is singing so as to determine whether the live-streaming data corresponding to the first user account in the live-streaming period is singing type. Or, the content recognition model includes a behavior recognition model (BRM). The content of the live-streaming data corresponding to the first user account in the live-streaming period is analyzed based on the BRM to determine whether the live streamer is dancing so as to determine whether the live-streaming data corresponding to the first user account in the live-streaming period is dancing type.

In 4012, the server determines the resource allocation weight corresponding to the first user account in the live-streaming period based on the first behavior information corresponding to the first user account in the live-streaming period in response to the live-streaming type being a target live-streaming type.

The first behavior information is interactive information and describes information about an interactive behavior in the virtual space. For example, the first behavior information describes the interactive behavior between the first user account and the second user accounts in the virtual space.

The target live-streaming type is a live-streaming type indicating that is the live streamer contained in the corresponding live-streaming data is performing an interaction with the second user accounts. For example, the live-streaming data of the target live-streaming type includes that the live streamer is singing, dancing, speaking, and other behaviors, which indicates the interactive behavior. In the embodiment of the present disclosure, that live-streaming data published by any first user account in any live-streaming period is the target live-streaming type indicates that the live-streaming data corresponding to the first user account in the live-streaming period contains an interactive behavior and the live streamer is performing an interaction with the users of the second user accounts. That is, the live streamer is interacted with the user of the second user account in the live-streaming period, and the live-streaming data corresponding to the first user account in the live-streaming period is a valid live-streaming type. In response to that the live streamer is not performing an interactive behavior with the second user accounts in the live-streaming data corresponding to the first user account in the live-streaming period (for example, the live streamer just sits but doesn't speak, sing or dance) or no live streamer is involved in the live-streaming data corresponding to the first user account in the live-streaming period, it indicates that the live-streaming data of the first user account in the live-streaming period is invalid. The first behavior information describes an interactive operation between the second user accounts and the first user account. In some embodiments, the first behavior information describes a like giving operation or resource transferring operation performed on the first user account by the second user account.

In response to the live-streaming data corresponding to the first user account in the live-streaming period being the target live-streaming type, the live-streaming data corresponding to the first user account in the live-streaming period is determined to be the valid live-streaming type. In this case, the resource allocation weight corresponding to the first user account in the live-streaming period is determined based on the first behavior information corresponding to the first user account in the live-streaming period. In some embodiments, a resource allocation weight corresponding to each first user account in any live-streaming period is referred to be an anchor contribution right now (ACRN). A resource allocation weight corresponding to any first user account in any live-streaming period can reflect the favorite degree of the live-streaming data corresponding to the first user account in the virtual space in the live-streaming period to the user of the second user account in the virtual space, and can also represent the contribution degree of the first user account to the virtual space in the live-streaming period.

In this embodiment of the present disclosure, the virtual space corresponds to the plurality of live-streaming periods. Live-streaming types of live-streaming data published by the first user account in the plurality of live-streaming periods may be different. For example, a live-streaming type of live-streaming data corresponding to the first user account in the first live-streaming period is singing, and a live-streaming type of live-streaming data corresponding to the first user account in the second live-streaming period is dancing. In addition, an interactive operation between the second user accounts in the virtual space and the first user accounts in each live-streaming period is different, in other words, corresponding first behavior information corresponding to the first user account in each live-streaming period may be different. Therefore, the resource allocation weight corresponding to the first user account in each live-streaming period may be different.

In some embodiments, 4012 includes at least one of the following operations:

In a first operation, the server determines a product of a quantity of likes contained in the first behavior information and a first weight as the resource allocation weight corresponding to the first user account in the live-streaming period.

In a second operation, the server determines a product of a quantity of transferred resources contained in the first behavior information and a second weight as the resource allocation weight corresponding to the first user account in the live-streaming period.

The first weight and the second weight are specified arbitrarily. For example, the first weight is 0.001 and the second weight is 0.01. The quantity of likes is configured to represent a quantity of likes given by the second user accounts to the first user account, and the quantity of transferred resources is a quantity of resources posted by the second user account to the first user account. The resource allocation weight corresponding to the first user account is determined in different manners based on different information contained in the first behavior information, which enriches the manner of determining the resource allocation weight and ensures the accuracy of the resource allocation weight.

It should be noted that the above two operations can be combined to determine the resource allocation weight corresponding to the first user account in the live-streaming period, based on a sum of the product of the quantity of likes and the first weight and the product of the quantity of transferred resources and the second weight.

In some embodiments, in the case that the first behavior information corresponding to any first user account in any live-streaming period includes a quantity of likes and a quantity of transferred resources, a resource allocation weight corresponding to the first user account in the live-streaming period satisfies the following formula:

$$ACRN = M_1 * 0.01 + M_2 * 0.001$$
.

In the above formula, A CRN represents the resource allocation weight corresponding to the first user account in the live-streaming period; $M_1$ represents the quantity of transferred resources contained in the first behavior information corresponding to the first user account in the live-streaming period, and 0.01 represents the second weight; and $M_2$ represents the quantity of likes contained in the first behavior information corresponding to the first user account in the live-streaming period, and 0.001 represents the first weight.

In some embodiments, 4012 includes: in response to the live-streaming type being the target live-streaming type, determining the resource allocation weight corresponding to the first user account in the live-streaming period according to the first behavior information corresponding to the first user account in the live-streaming period based on an independent-account settlement system. The independent-account settlement system is configured to determine the resource allocation weight corresponding to the first user account. For example, the independent-account settlement system is provided as a Taurus settlement system (TSS).

In 4013, in response to the live-streaming type being not a target live-streaming type, the server determines the resource allocation weight corresponding to the first user accounts in the live-streaming period based on a target value.

The target value may be any value. For example, the target value is 0. In response to the live-streaming type of the live-streaming data corresponding to the first user account in the live-streaming time being not the target live-streaming type, the live-streaming data corresponding to the first user account in the live-streaming period is determined to be not a valid live-streaming type. In this case, the target value is determined as the resource allocation weight corresponding to the first user account in the live-streaming period.

A resource allocation weight corresponding to any first user account in each live-streaming period is determined based on live-streaming types of live-streaming data of the first user account in the plurality of live-streaming periods, so as to ensure that the resource allocation weight matches live-streaming performed by the first user account, thereby ensuring the accuracy of the resource allocation weight. Moreover, the resource allocation weight is determined based on the first behavior information corresponding to the first user account in the live-streaming period, so as to ensure that the determined resource allocation weight matches the interaction between the first user account and the second user accounts, thereby ensuring the accuracy of the resource allocation weight.

It should be noted that, in the above first manner, a resource allocation weight corresponding to each first user account in each live-streaming period is acquired in response to the first user account having corresponding live-streaming data in the live-streaming period. In another embodiment, a user of any first user account among the plurality of first user accounts can enter the live-streaming room and start live-streaming at any time point, or exit the live-streaming room and stop live-streaming at any time point. That is, among the plurality of live-streaming periods, the first user account may not have corresponding live-streaming data in at least one live-streaming period. That is, the first user account does not perform live-streaming in the at least one live-streaming period. In this case, the live-streaming data of the first user account in the at least one live-streaming period cannot be acquired. Therefore, a resource allocation weight corresponding to the first user account in the at least one live-streaming period is determined based on the target value.

In a second manner, the server receives weight information reported by any first user account among the plurality of first user accounts.

The weight information includes a resource allocation weight corresponding to the first user account in a live-streaming period satisfying a valid live-streaming condition. The live-streaming period satisfying the valid live-streaming condition indicates that live-streaming data published by the first user account in the live-streaming period is a target live-streaming type. The weight information is determined by a first terminal logging in the first user account based on first behavior information corresponding to the first user account in any live-streaming period in response to the first user account satisfying the valid live-streaming condition in the live-streaming period, that is, in response to live-streaming data corresponding to the first user account in the live-streaming period corresponding to the weight information being a valid live-streaming type. The first behavior information describes an interactive operation between the second user accounts and the first user account.

In this embodiment of the present disclosure, during live-streaming of the first terminal in the virtual space, in response to the interactive operation being performed on the first user account currently logged-in by the second user account in the virtual space, the first terminal acquires behavior information corresponding to the first user account. In the case that the second user account in the virtual space performs the interactive operation on the first user account currently logged-in, the first terminal can acquire behavior information corresponding to the first user account. For the live-streaming period corresponding to the weight information, the first terminal determines the first behavior information corresponding to the first user account in the live-streaming period based on the interactive operation acquired in the live-streaming period.

The resource allocation weight corresponding to the first user account in the live-streaming period satisfying the valid live-streaming condition can be determined by receiving weight information reported by each first user account. In this way, the server does not need to determine the weight information of each first user account, thereby saving resources of the server.

In some embodiments, for weight information reported by any first user account, the process of determining the resource allocation weight corresponding to the first user account in a live-streaming period corresponding to the weight information includes that the first terminal determines the resource allocation weight corresponding to the first user account in the live-streaming period based on first behavior information corresponding to the first user account in the live-streaming period in response to the first user account satisfying the valid live-streaming condition in the live-streaming period, and generates the weight information of the first user account.

The first user account is a terminal logging in the first user account, the weight information includes the resource allocation weight corresponding to the first user account in the live-streaming period. Satisfying the valid live-streaming condition in the live-streaming period indicates that live-streaming data published by the first user account in the live-streaming period belongs to the target live-streaming type.

In a possible implementation of the embodiment, the process of reporting the weight information to the server by the first user account includes that, at an end time point of any live-streaming period in the virtual space, the first terminal determines, in response to the first user account satisfying the valid live-streaming condition in the live-streaming period, the resource allocation weight corresponding to the first user account in the live-streaming period based on first behavior information corresponding to the first user account in the live-streaming period, generates weight information of the first user account, and reports the weight information of the first user account to the server.

In a possible implementation of this embodiment, the process of determining the live-streaming type of the live-streaming data includes determining the live-streaming type of the live-streaming data published by the first user account into the virtual space during the live-streaming period by recognizing content of the live-streaming data published by the first user account into the virtual space in the live-streaming period.

In a possible implementation of this embodiment, the process of determining the live-streaming type of the live-streaming data includes that the first terminal determines a live-streaming type of the live-streaming data published by the first user account at a start time point by recognizing content of live-streaming data published by the first user account at the start time point of the live-streaming period, and determines a live-streaming type of the live-streaming data published by the first user account at an end time point by recognizing content of live-streaming data published by the first user account at the end time point of the live-streaming period, and determines, in response to both the live-streaming type corresponding to the first user account at the start time point and the live-streaming type corresponding to the first user account at the end time point being the target live-streaming type, that the live-streaming data published by the first user account into the virtual space in the live-streaming period is the target live-streaming type.

In a possible implementation of this embodiment, the process of determining the live-streaming type of the live-streaming data corresponding to the first user account in the live-streaming period includes that the first terminal acquires, in response to a time corresponding to the virtual space reaching a start time point of any live-streaming period, live-streaming data of the first user account at the start time point, and determines a live-streaming type of the live-streaming data published by the first user account at the start time point by recognizing content of the live-streaming data published by the first user account at the start time point, and acquires, in response to the time corresponding to the virtual space reaching an end time point of the live-streaming period, live-streaming data of the first user account at the end time point, and determines a live-streaming type of the live-streaming data published by the first user account at the end time point by recognizing content of the live-streaming data published by the first user account at the end time point, and determines, in response to both the live-streaming type corresponding to the first user account at the start time point of the live-streaming period and the live-streaming type corresponding to the first user account at the end time point of the live-streaming period being the target live-streaming type, that the live-streaming data of the first user account in the live-streaming period is the target live-streaming type.

In a possible implementation of this embodiment, the process of determining the live-streaming type of the live-streaming data corresponding to the first user account in any live-streaming period includes that the first terminal determines the live-streaming type of the live-streaming data published by the first user account into the virtual space in the live-streaming period by recognizing, based on a content recognition model, content of the live-streaming data published by the first user account into the virtual space in the live-streaming period.

The content recognition model is configured to recognize the live-streaming type of the live-streaming data. For example, the content recognition model is provided as an LDS.

For example, the content recognition model includes an ARM. Content of audio data in the live-streaming data corresponding to the first user account in the live-streaming period is recognized based on the ARM, and whether the live streamer is speaking is determined based on the live-streaming data corresponding to the first user account in the live-streaming period to determine whether the type of the live-streaming data corresponding to the first user account in the live-streaming period is speaking. Or, the content recognition model includes an FRM. The content of the live-streaming data corresponding to the first user account in the live-streaming period is recognized based on the FRM, and whether the live streamer is singing is determined based on the live-streaming data corresponding to the first user account in the live-streaming period to determine whether the type of the live-streaming data corresponding to the first user account in the live-streaming period is singing. Or, the content recognition model includes a BRM. The content of the live-streaming data corresponding to the first user account in the live-streaming period is recognized based on the BRM, and whether the live streamer is dancing or the like is determined based on the live-streaming data corresponding to the first user account in the live-streaming period to determine whether the type of the live-streaming data corresponding to the first user account in the live-streaming period is dancing.

In some embodiments, at least one piece of weight information reported by any first user account among the plurality of first user accounts is received.

Each piece of weight information includes the resource allocation weight corresponding to the first user account in the live-streaming period satisfying the valid live-streaming condition. In addition, for an identical first user account, different weight information reported corresponds to different live-streaming periods. Resource allocation weights corresponding to the first user account in a plurality of live-streaming periods satisfying the valid live-streaming condition can be determined by receiving a plurality of pieces of weight information reported by the first user account. In this way, the resource allocation weight corresponding to each first user account in at least one live-streaming period satisfying the valid live-streaming condition can be determined by receiving weight information reported by the plurality of first user accounts.

In some embodiments, based on the second manner, 401 further includes that the server determines the resource allocation weight corresponding to the first user account based on a target value in other live-streaming periods that the live-streaming periods does not satisfy the valid live-streaming condition, among the plurality of live-streaming periods.

The target value is any value. For example, the target value is 0.

The virtual space corresponds to the plurality of live-streaming periods. For any first user account, in addition to the resource allocation weight of the first user account in the live-streaming period satisfying the valid live-streaming condition being determined by receiving weight information reported by the first user account, the resource allocation weight corresponding to the first user account in the live-streaming periods other than the live-streaming period satisfying the valid live-streaming condition (referring to other live-streaming periods) among the plurality of live-streaming periods also need to be determined, and the resource allocation weight corresponding to the first user account in the other live-streaming periods is determined based on the target value. In this way, the resource allocation weights corresponding to any first user account in each live-streaming period can be determined in the above manner. The resource allocation weight corresponding to the first user account in the other live-streaming periods is determined based on the target value, that is, the resource allocation weight of the first user account in each live-streaming period is determined. In this way, subsequent resource allocation can be performed based on the resource allocation weights corresponding to the plurality of first user accounts in each live-streaming period, to ensure accuracy of subsequent resource allocation.

In some embodiments, upon the second manner, the method for allocating resources further includes screening out weight information that has passed verification from the plurality of pieces of weight information reported by the first user account, and determining the resource allocation weight corresponding to the first user account in at least one live-streaming period based on the weight information that has passed verification.

The plurality of pieces of weight information are reported by the first user account. Therefore, the weight information that has passed is screened out by verifying the plurality of pieces of weight information reported by the first user account, to ensure accuracy of the weight information as screened-out. Subsequently, the server allocates resources based on the weight information as screened-out, thereby ensuring the accuracy of subsequent resource allocation.

In a possible implementation of this embodiment, upon screening out the weight information that has passed verification, the method further includes: determining other live-streaming periods in which a resource allocation weight corresponding to the first user account is not determined among the plurality of live-streaming periods, and determining the resource allocation weight corresponding to the first user account in the other live-streaming periods based on the target value.

In the case that the weight information that has passed verification is screened out (i.e., the weight information goes through a verification process), the resource allocation weight corresponding to the first user account in the live-streaming period corresponding to the weight information that has passed verification is determined. For the other live-streaming periods in which the resource allocation weights corresponding to the first user account has passed verification, the resource allocation weights corresponding to the first user account in these live-streaming periods is determined based on the target value. In this way, the resource allocation weights corresponding to the first user account in each live-streaming period are determined.

In a possible implementation of the embodiment, the process of verifying weight information includes: for any piece of weight information reported by the first user account, determining the live-streaming type of the live-streaming data published by the first user account into the virtual space in a live-streaming period by recognizing content of the live-streaming data published by the first user account into the virtual space in the live-streaming period corresponding to the weight information; and determining that the weight information passes verification in response to the live-streaming type being the target live-streaming type, or determining that the weight information does not pass verification in response to the live-streaming type being not the target live-streaming type. In this embodiment, the verification is a process to determine whether the weight information corresponds to a target live streaming type in the specific live-streaming period.

The weight information reported by the first user account can indicate that the live-streaming data corresponding to the first user account in the live-streaming period corresponding to the weight information is the target live-streaming type. Therefore, whether the weight information passes verification is determined by determining the live-streaming type of the live-streaming data corresponding to the first user account in the live-streaming period, to ensure accuracy of the weight information.

In a possible implementation of this embodiment, the weight information verification process includes the following processes 4014 to 4016:

In 4014, the server acquires at least one live-streaming start time point reported by the first user account, and a live-streaming end time point corresponding to each live-streaming start time point.

The live-streaming start time point represents a time point at which the user of the first user account enters the virtual space and starts live-streaming, and the live-streaming end time point represents a time point at which the user of the first user account exits the virtual space and stops live-streaming. A period between any live-streaming start time point and a corresponding live-streaming end time point is a period in which live-streaming is performed by the first user account in the virtual space.

In this embodiment of the present disclosure, the virtual space is a live-streaming room for the co-hosting. In the virtual space, any first user account may perform live-streaming in a period, or the first user account may perform live-streaming in a plurality of discontinuous periods. In response to the user of the first user account entering the virtual space and starting live-streaming, a live-streaming start time point is reported to the server, to indicate that the user of the first user account starts live-streaming from the live-streaming start time point. In response to the user of the first user account exiting the virtual space, a live-streaming end time point is reported to the server, to indicate that the user of the first user account stops live-streaming. A period between the live-streaming start time point and the live-streaming end time point is a period in which the user of the first user account performs live-streaming. The user of the first user account can enter and exit the virtual space arbitrarily, and reports a live-streaming start time point and a live-streaming end time point each time the user of the first user account enters and exits the virtual space. As shown in FIG. 5, the first user account is the live streamer account, and time points at which users of the plurality of live streamer accounts enter the virtual space and start live-streaming may be different during a whole live streaming process in the virtual space, and a user of each live streamer account can exit the live-streaming room and stop live-streaming at any time point. For example, a live streamer account 1 has two live-streaming time lengths. A period between a first live-streaming start time point and a first live-streaming end time point for the live streamer account 1 is a time length of first live-streaming performed by the live streamer account 1. A period between a second live-streaming start time point and a second live-streaming end time point for the first user account 1 is a time length of second live-streaming performed by the live streamer account 1.

In 4015, the server determines that the weight information passes verification in response to a live-streaming period corresponding to any piece of weight information reported by the first user account being within a period between any live-streaming start time point reported by the first user account and a live-streaming end time point corresponding to the live-streaming start time point.

In 4016, the server determines that the weight information does not pass verification in response to a live-streaming period corresponding to any piece of second weight information reported by the first user account being not within a period between any live-streaming start time point reported by the first user account and a live-streaming end time point corresponding to the live-streaming start time point.

Because the first user account performs live-streaming only in the period between the reported live-streaming start time point and the corresponding live-streaming end time point, the live-streaming period corresponding to the weight information reported by the first user account is within the live-streaming period of the first user account. Therefore, the weight information passes verification in response to a live-streaming period corresponding to a resource allocation weight contained in any piece of weight information being within the live-streaming period of the first user account. The weight information does not pass verification in response to a live-streaming period corresponding to a resource allocation weight contained in any piece of weight information being not within the live-streaming period of the first user account.

The live-streaming period corresponding to the weight information is verified based on the live-streaming start time point reported by the first user account and the live-streaming end time point corresponding to the live-streaming start time point, to ensure that the live-streaming period corresponding to the weight information is within the live-streaming period of the first user account, thereby ensuring the accuracy of the live-streaming period corresponding to the weight information, and the accuracy of the weight information as screened-out.

In a third manner, the resource allocation weight corresponding to each first user account is determined based on first behavior information corresponding to the first user account.

The first behavior information describes an interactive operation between the second user accounts and the first user account. A resource allocation weight corresponding to any first user account is a weight of the first user account in a whole live-streaming time length in the virtual space.

The first behavior information corresponding to each first user account can indicate the interactive operation performed on the first user account by the second user accounts or the interaction between the first user account and the second user account. Therefore, the weight of each first user account is determined based on the first behavior information corresponding to the first user account to ensure that the resource allocation weight corresponding to the first user account matches the interactive operation performed on the first user account by the second user accounts, thereby ensuring the accuracy of the resource allocation weight corresponding to the first user account.

The third manner is performed in a rationale the same as 4012. Details are not described herein again.

In a fourth manner, the server receives a resource allocation weight reported by each first user account.

The resource allocation weight corresponding to any first user account is determined by a first terminal logging in the first user account, based on first behavior information corresponding to the first user account, and the first behavior information describes an interactive operation between the second user accounts and the first user account. A resource allocation weight corresponding to any first user account is a weight of the first user account in a whole live-streaming time length in the virtual space.

Each first user account reports its own resource allocation weight. In this way, the server does not need to allocate or determine the resource allocation weight corresponding to the first user account, thereby saving resources of the server.

The fourth manner is performed in a rationale the same as the second fashion. Details are not described herein again.

In 402, the server acquires activity levels in the plurality of live-streaming periods.

The activity level describes a degree of activity of the second user account in the virtual space. The server can determine the degrees of activity of the second user account in the virtual space in the plurality of live-streaming periods by acquiring the activity levels in the plurality of live-streaming periods. In some embodiments, the activity level is a live activity level (LAL).

In some embodiments, 402 includes the server determining the activity level in each live-streaming period based on second behavior information in the live-streaming period.

The second behavior information is interactive information and indicates information about an interactive behavior in the virtual space. For example, the second behavior information describes the interactive operation performed on the virtual space by the second user account. For example, the interactive operation is a like giving operation, a resource transferring operation, or a commenting operation. The activity level in each live-streaming period can indicate a degree of activity of the second user account in the virtual space in the corresponding live-streaming period, and the second behavior information in each live-streaming period can indicate information about an operation performed by the second user account in the corresponding live-streaming period, that is, the second behavior information in each live-streaming period can reflect a degree of activity of the virtual space in the corresponding live-streaming period. Therefore, the activity level in each live-streaming period is determined based on the second behavior information in the live-streaming period.

The second behavior information describes the interactive operation performed on the virtual space by the second user account. Therefore, the activity level in each live-streaming period is determined based on the second behavior information in the live-streaming period, to ensure that the activity level in the live-streaming period matches the interactive operation performed on the virtual space by the second user account in the corresponding live-streaming period, thereby ensuring the accuracy of the activity level.

In a possible implementation of this embodiment, the second behavior information in each live-streaming period describes an interactive operation that is performed on the virtual space by the second user account and in which no first user account is specified.

In this embodiment of the present disclosure, during watching live-streaming data in the virtual space, the user of the second user account can perform an interactive operation for any first user account or perform an interactive operation on the virtual space without specifying the first user account. The activity level of the virtual space in each live-streaming period is determined based on the interactive operation that is performed on the virtual space by the second user account and in which no first user account is specified.

In a possible implementation of this embodiment, a process of determining the activity level in each live-streaming period includes at least one of the following operations.

In a first operation, the activity level in each live-streaming period is determined based on a product of a quantity of likes contained in the second behavior information in the live-streaming period and a first value.

In a second operation, the activity level in each live-streaming period is determined based on a product of a quantity of transferred resources contained in the second behavior information in the live-streaming period and a second value.

In a third operation, the activity level in each live-streaming period is determined based on a product of a quantity of comments contained in the second behavior information in the live-streaming period and a third value.

The first, second and third values are set arbitrarily. The quantity of likes indicates a quantity of like giving operations performed by the second user account in the virtual space, the quantity of transferred resources indicates a quantity of resources posted by the second user account in the virtual space, and the quantity of comments indicates a quantity of comments posted by the second user account in the virtual space.

The activity level in each live-streaming period is determined in different manners based on different information contained in the second behavior information, which enriches the manner of determining the activity level and ensures the accuracy of the activity level in the live-streaming period.

It should be noted that any two of the above three operations or the above three operations can be combined. For example, a product of a quantity of likes contained in second behavior information in any live-streaming period and the first value, and a product of a quantity of transferred resources contained in the second behavior information and the second value are summated and determined as an activity level in the live-streaming period. For another example, a product of a quantity of likes contained in second behavior information in any live-streaming period and the first value, a product of a quantity of transferred resources contained in the second behavior information and the second value, and a product of a quantity of comments contained in the second behavior information and the third value are summated and determined as an activity level in the live-streaming period.

In some embodiments, the second behavior information in any live-streaming period includes a quantity of likes, a quantity of transferred resources, and a quantity of comments, an activity level in the live-streaming period meets the following formula:

$$LAL = M_3 * 0.01 + M_4 * 0.001 + M_5 * 0.01$$

In the above formula, $LAL$ represents the activity level in the live-streaming period, $M_3$ represents the quantity of transferred resources contained in the second behavior information in the live-streaming period, the first 0.01 represents the second value, $M_4$ represents the quantity of likes contained in the second behavior information in the live-streaming period, 0.001 represents the first value, $M_5$ represents the quantity of comments contained in the second behavior information in the live-streaming period, and the second 0.01 represents the third value.

In a possible implementation of this embodiment, the server determines, based on the independent-account settlement system, the activity level in each live-streaming period according to the second behavior information in the live-streaming period. The independent-account settlement system is configured to determine the activity level in the live-streaming period. For example, the independent-account settlement system is provided as the TSS.

In some embodiments, 402 includes the server receiving the activity level in each live-streaming period reported by any first user account among the plurality of first user accounts.

The activity level in each live-streaming period is determined by a first terminal logging in the first user account, based on the second behavior information in the live-streaming period, and the second behavior information describes the interactive operation performed on the virtual space by the second user account.

In the embodiment of the present disclosure, the first user account reporting the activity level in the live-streaming period is any first user account that is performing live-streaming in the virtual space. For example, the first user account is the 1st first user account among the plurality of first user accounts that are performing live-streaming in the virtual space. During live-streaming in the virtual space, information about the interactive operation performed on the virtual space by the second user account, for example, the like giving operation, resource transferring operation, or commenting operation performed on the virtual space can be acquired by each first user account. Therefore, the activity level in each live-streaming period can be determined based on the second behavior information in the live-streaming period for any first user account that is performing live-streaming in the virtual space. The activity level in each live-streaming period reported by the first user account is received. In this way, the server does not need to determine the activity level in each live-streaming period, thereby saving the resources of the server.

In a possible implementation of the embodiment, the process in which the first terminal determines the activity level in each live-streaming period includes the first terminal determining the activity level in each live-streaming period based on the second behavior information in the live-streaming period.

The first user account logged in with the first terminal is the first user account reporting the activity level. A process in which the first terminal determines the activity level in the live-streaming period based on the second behavior information is the same as the process in which the server determines the activity level in the live-streaming period based on the second behavior information, and details are not described herein again.

For example, the first terminal acquires the second behavior information in any live-streaming period at an end time point of the live-streaming period, determines an activity level in the live-streaming period based on the second behavior information in the live-streaming period, and reports the activity level in the live-streaming period to the server.

For example, the first terminal acquires the second behavior information in any live-streaming period at an end time point of the live-streaming period, determines an activity level in the live-streaming period based on the independent-account settlement system and the second behavior information in the live-streaming period, and reports the activity level in the live-streaming period to the server. The independent-account settlement system is configured to determine the activity level in the live-streaming period. For example, the independent-account settlement system is provided as the TSS.

In a possible implementation of the embodiment, the process of determining the first user account for reporting the activity level includes determining an arrangement sequence of the plurality of first user accounts in the virtual space based on a time sequence of entering the virtual space, and determining the 1st first user account in the arrangement sequence as the first user account for reporting the activity level in each live-streaming period.

For example, the first user account for reporting the activity level is determined according to the time sequence of the plurality of first user accounts entering the virtual space, the activity levels in the plurality of live-streaming periods may be reported by the plurality of first user accounts. For example, in the case that the arrangement sequence of the plurality of first user accounts is determined, the 1st first user account in the arrangement sequence reports an activity level in a live-streaming period to the server at the end of the live-streaming period. If the 1st first user account exits the virtual space, the 2nd first user account in the arrangement sequence reports an activity level in a live-streaming period to the server at the end of the live-streaming time, and so on. In this way, the server can acquire activity levels that are in the plurality of live-streaming periods and reported by the plurality of first user accounts.

In 403, the server generates a second resource quantity corresponding to each live-streaming period by dividing the target resource quantity corresponding to the virtual space based on the activity levels of the virtual space in the plurality of live-streaming periods.

The target resource quantity is a quantity of resources posted by the second user account in the virtual space. For example, when the virtual space is a live-streaming room, the second user account is an audience account accessing the live-streaming room. In some embodiments, the target resource quantity is a total quantity of resources posted by the second user account in the virtual space. In another embodiment, the target resource quantity is a total quantity of resources posted by the second user account in the virtual space and not specified for the first user account.

The target resource quantity corresponding to the virtual space is divided based on the activity level in each live-streaming period to ensure that the second resource quantity corresponding to the live-streaming period is related to the activity level in the live-streaming period, thereby ensuring the accuracy of the second resource quantity acquired through division.

In some embodiments, 403 includes: determining a sum of the activity levels in the plurality of live-streaming periods, determining a second ratio of the activity level in each live-streaming period to the sum, and determining, based on a product of the second ratio corresponding to the live-streaming period and the target resource quantity, the second resource quantity corresponding to the live-streaming period.

The target resource quantity is divided based on the activity level in each live-streaming period to ensure that a live-streaming period with a higher activity level corresponds to a larger second resource quantity and a live-streaming period with a lower activity level corresponds to a less second resource quantity, thereby ensuring the accuracy of the second resource quantity.

In 404, for any live-streaming period among the plurality of live-streaming periods, the server generates a third resource quantity corresponding to each first user account in each live-streaming period by dividing the second resource quantity corresponding to the live-streaming period based on resource allocation weights corresponding to the plurality of first user accounts in the live-streaming period.

The third resource quantity indicates a quantity of resources that can be allocated to the corresponding first user account in the live-streaming period. Different live-streaming periods correspond to different second resource quantities. Therefore, the second resource quantity corresponding to any live-streaming period is divided based on resource allocation weights corresponding to the plurality of first user accounts in the live-streaming period to ensure that the third resource quantity acquired through division match the corresponding resource allocation weights, thereby ensuring the accuracy of the third resource quantity. In the above manner, the second resource quantity corresponding to each live-streaming period is divided to generate a third resource quantity corresponding to each first user account in the live-streaming period.

In some embodiments, 404 includes: determining a sum of the resource allocation weights corresponding to the plurality of first user accounts in the live-streaming period, determining a first ratio of a resource allocation weight corresponding to each first user account in the live-streaming period to the sum, and determining the third resource quantity corresponding to the first user account in the live-streaming period based on a product of the first ratio corresponding to the first user account and the second resource quantity corresponding to the live-streaming period.

The resource quantity is divided based on the resource allocation weights corresponding to the plurality of first user accounts in the live-streaming period. A first user account with a larger resource allocation weight corresponds to a larger third resource quantity, and a first user account with a smaller resource allocation weight corresponds to a smaller third resource quantity, to ensure that a resource quantity acquired for each first user account through division matches a corresponding resource allocation weight, thereby ensuring the accuracy of the resource quantity acquired through division.

It should be noted that, in one embodiment of the present disclosure, the second resource quantity corresponding to each live-streaming period is determined, and then the second resource quantity corresponding to each first user account in the live-streaming period is determined. However, in another embodiment, 403 and 404 are not performed, but another manner is configured to divide the second resource quantity corresponding to each live-streaming period based on the resource allocation weights corresponding to the plurality of first user accounts, to generate the third resource quantity corresponding to each first user account in the live-streaming period.

A whole live-streaming time length in the virtual space is divided into the plurality of live-streaming periods, the target resource quantity is divided based on the activity level in each live-streaming period to obtain a second resource quantity, and then the second resource quantity corresponding to the live-streaming period is divided based on the resource allocation weights corresponding to the plurality of first user accounts. This realizes allocation by labor, ensures that the second resource quantity corresponding to each live-streaming period matches the corresponding activity level, and also ensures that the third resource quantity corresponding to each first user account matches the corresponding resource allocation weight, thereby ensuring the accuracy of each third resource quantity.

In some embodiments, the process of determining the third resource quantity corresponding to each first user account in each live-streaming period includes for any live-streaming time, generating a third resource quantity corresponding to the first user account in the live-streaming period by dividing the second resource quantity corresponding to the live-streaming period based on a total resource allocation weight corresponding to the first user account in the plurality of live-streaming periods.

In the embodiment of the present disclosure, the total resource allocation weight corresponding to each first user account is configured to represent a weight of the corresponding first user account in the virtual space. That is, a total resource allocation weight corresponding to any first user account is applicable to each live-streaming period, i.e., the resource allocation weight corresponding to the first user account in each live-streaming period is identical.

The second resource quantity corresponding to each live-streaming period is divided based on the total resource allocation weight corresponding to each first user account to generate the third resource quantity corresponding to the first user account in the live-streaming period. That is, each first user account corresponds to a plurality of third resource quantities. The second resource quantity corresponding to each live-streaming period is divided based on the total resource allocation weight corresponding to each first user account, to ensure that the third resource quantity corresponding to the first user account in the live-streaming period matches the corresponding total resource allocation weight. This realizes allocation by labor, ensures the accuracy of the third resource quantity, and ensures fairness of resource allocation.

In 405, the server determines the first resource quantity corresponding to each of the first user accounts based on a sum of the third resource quantities corresponding to each of the first user accounts in the plurality of live-streaming periods.

In the case that the third resource quantities corresponding to each first user account in the plurality of live-streaming periods are determined, the first resource quantity corresponding to the first user account is determined based on the sum of the third resource quantities corresponding to the first user account in the plurality of live-streaming periods, namely, the first resource quantity is a quantity of resources that need to be allocated to the first user account.

It should be noted that, in the embodiment of the present disclosure, the third resource quantity corresponding to each first user account in each live-streaming period is determined, and then the first resource quantity corresponding to the first user account is determined. However, in another embodiment, 403 to 405 are not performed, but another manner is configured to divide the target resource quantity corresponding to the virtual space based on the resource allocation weights corresponding to the plurality of first user accounts, to generate the first resource quantity corresponding to each first user account.

In some embodiments, the process of determining the first resource quantity corresponding to each first user account includes determining a third ratio of the resource allocation weight corresponding to the first user account to a sum of the resource allocation weights corresponding to the plurality of first user accounts, and determining, based on a product of the third ratio corresponding to the first user account and the target resource quantity, the first resource quantity corresponding to the first user account.

The target resource quantity is divided based on the resource allocation weight corresponding to each first user account, to ensure that a first user account with a larger resource allocation weight corresponds to a larger first resource quantity, thereby realizing allocation by labor and ensuring the fairness of resource allocation.

In 406, the server allocates resources of the target resource quantity to the plurality of first user accounts based on the first resource quantity corresponding to each of the first user accounts.

The first resource quantity corresponding to each first user account is the quantity of resources that need to be allocated to the first user account. Based on the first resource quantity corresponding to the first user account, resources of the first resource quantity are allocated to the corresponding first user account to ensure the accuracy of resource allocation.

In some embodiments, the target resource quantity is the quantity of resources that are posted by the second user account in the virtual space and not specified for the first user account. In addition, each first user account also corresponds to a fourth resource quantity, and the fourth resource quantity is a quantity of resources posted by the second user account in the virtual space to the first user account. In this case, 406 includes, for any first user account, determining, based on a sum of a first resource quantity and a fourth resource quantity corresponding to the first user account, a total resource quantity corresponding to the first user account, and allocating a corresponding resource to each first user account based on a total resource quantity corresponding to the first user account.

In the embodiment of the present disclosure, the resources posted by the second user account in the virtual space and not specified for the first user account are allocated to the plurality of first user accounts based on the resource allocation weights corresponding to the plurality of first user accounts in each live-streaming period. In addition, the resource posted by the second user account in the virtual space to each first user account is allocated to the corresponding first user account, that is, the resources posted by the second user account in the virtual space and specified for the first user account are no longer allocated to other first user accounts.

According to the method provided by the embodiments of the present disclosure, the resources posted by the second user account in the virtual space are allocated based on the resource allocation weights corresponding to the plurality of first user accounts in the case of the co-hosting. That is, the resources posted by the second user account in the virtual space are allocated based on the interaction between the first user accounts and the second user accounts in the virtual space, thereby realizing allocation by labor and ensuring the accuracy of resource allocation.

FIG. 6 is a flowchart of a method for allocating resources according to some embodiments of the present disclosure. As shown in FIG. 6, the method includes the following processes.

In response to entering a virtual space and starting live-streaming, a first terminal reports a live-streaming start time point to a server, and the server stores, in a one-to-one corresponding manner, the live-streaming start time point and a first user account logged in with the first terminal.

During the live-streaming, the first terminal determines, based on an ARM, an FRM, and a BRM in a live-streaming content recognition system, a live-streaming type of live-streaming data corresponding to the first user account currently logged-in in each live-streaming period. In response to the live-streaming performed by the first user account in any live-streaming period being a target live-streaming type, the first terminal determines a resource allocation weight corresponding to the first user account in the live-streaming period based on an independent-account settlement system and first behavior information corresponding to the first user account in the live-streaming period (e.g., a received quantity of transferred resources and a received quantity of likes), and reports weight information of the first user account to the server. The weight information indicates the resource allocation weight corresponding to the first user account in the live-streaming period, and the server stores the weight information and the first user account in the one-to-one corresponding manner.

In response to exiting a live-streaming room and stopping live-streaming, the first terminal reports a live-streaming end time point to the server, and the server stores the live-streaming end time point and the first user account in the one-to-one corresponding manner. In the case that the live-streaming in the virtual space ends, resources are allocated to each first user account based on stored information corresponding to the first user account in the virtual space.

FIG. 7 is a block diagram of an apparatus for allocating resources according to some embodiments of the present disclosure. As shown in FIG. 7, the apparatus includes: an acquiring unit 701, configured to acquire resource allocation weights corresponding to a plurality of first user accounts in a virtual space, wherein the resource allocation weight indicates a contribution degree of virtual-space behaviors of the first user accounts to the virtual space; a dividing unit 702, configured to generate a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and

an allocating unit 703, configured to allocate, based on the first resource quantity corresponding to each of the first user accounts, the resources of the target resource quantity to the plurality of first user accounts.

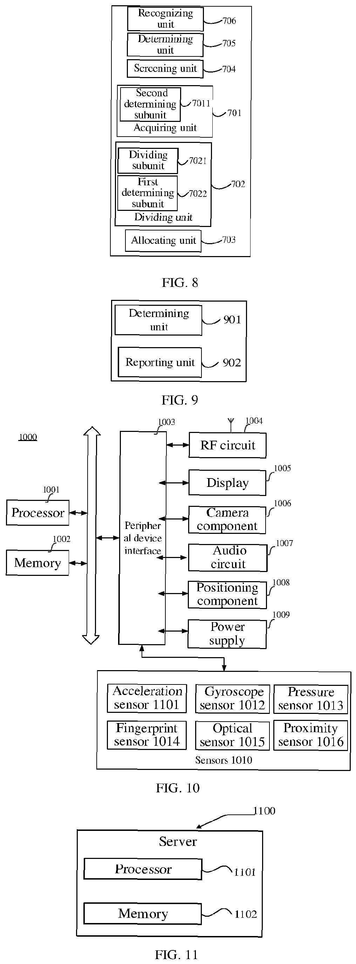

In some embodiments, as shown in FIG. 8, the dividing unit 802 includes: a dividing subunit 8021, configured to acquire a second resource quantity corresponding to each live-streaming period by dividing the target resource quantity based on activity levels of the virtual space in a plurality of live-streaming periods, wherein the activity level indicates a degree of activity of the second user accounts in the virtual space;

the dividing subunit 8021 is further configured to acquire a third resource quantity corresponding to each of the first user accounts in each live-streaming period by dividing the second resource quantity corresponding to the live-streaming period based on the resource allocation weights corresponding to the plurality of first user accounts; and a first determining subunit 8022, configured to determine a sum of the third resource quantities corresponding to each of the first user accounts in the plurality of live-streaming periods as the first resource quantity corresponding to each of the first user accounts.

In some embodiments, the dividing subunit 8021 is configured to, for any live-streaming period among the plurality of live-streaming periods, based on resource allocation weights corresponding to the plurality of first user accounts, determine a sum of the resource allocation weights corresponding to the plurality of first user accounts in the live-streaming period; determine a first ratio of the resource allocation weight corresponding to each of the first user accounts in the live-streaming period to the sum; and determine a product of the first ratio corresponding to each of the first user accounts and the second resource quantity corresponding to the live-streaming period as the third resource quantity corresponding to each of the first user accounts in the live-streaming period.

In some embodiments, as shown in FIG. 8, the acquiring unit 801 includes: a second determining subunit 8011, configured to, for any first user account and any live-streaming period, determine a live-streaming type of the live-streaming data published by the first user account into the virtual space in the live-streaming period, wherein the second determining subunit 8011 is further configured to determine the resource allocation weight corresponding to the first user account in the live-streaming period based on first behavior information corresponding to the first user account in the live-streaming period in response to the live-streaming type being a target live-streaming type, wherein the first behavior information describes an interactive operation between the second user accounts and the first user account; or determine a target value as the resource allocation weight corresponding to the first user account in the live-streaming period in response to the live-streaming type being not the target live-streaming type.

In some embodiments, the second determining subunit 8011 is configured to perform at least one of: determining a product of a quantity of likes contained in the first behavior information and a first weight as the resource allocation weight corresponding to the first user account in the live-streaming period; and determining a product of a quantity of transferred resources contained in the first behavior information and a second weight as the resource allocation weight corresponding to the first user account in the live-streaming period.

In some embodiments, the second determining subunit 8011 is configured to determine the live-streaming type of the live-streaming data by recognizing content of the live-streaming data published by the first user account into the virtual space in the live-streaming period.

In some embodiments, the acquiring unit 801 is configured to, for any first user account among the plurality of first user accounts, receive weight information reported by the first user account, wherein the weight information includes the resource allocation weight corresponding to the first user account in a live-streaming period satisfying a valid live-streaming condition, the live-streaming period satisfying the valid live-streaming condition means that the live-streaming data published by the first user account within the live-streaming period is the target live-streaming type, and the weight information is determined, based on first behavior information corresponding to the first user account in any live-streaming period, by a first terminal logging in the first user account in response to the first user account satisfying the valid live-streaming condition in the live-streaming period, and the first behavior information describes an interactive operation between the second user accounts and the first user account.

In some embodiments, as shown in FIG. 8, the apparatus for allocating resources further includes: a screening-out unit 804, configured to screen out, from a plurality of pieces of weight information reported by the first user account, weight information that has passed verification; and a determining unit 805, configured to determine the resource allocation weight corresponding to the first user account in at least one live-streaming period based on the weight information that has passed verification.

In some embodiments, the acquiring unit 801 is further configured to determine, among the plurality of live-streaming periods, other live-streaming periods in which the resource allocation weight corresponding to the first user account is not determined, and determine the resource allocation weight corresponding to the first user account in the other live-streaming periods based on a target value.

In some embodiments, as shown in FIG. 8, the apparatus for allocating resources further includes: a recognizing unit 806, configured to, for any piece of weight information reported by the first user account, determine a live-streaming type of the live-streaming data published by the first user account into the virtual space in the live-streaming period by recognizing content of the live-streaming data published by the first user account into the virtual space in the live-streaming period corresponding to the weight information; and the determining unit 805 is further configured to determine that the weight information passes verification in response to the live-streaming type being the target live-streaming type; or determine that the weight information does not pass verification in response to the live-streaming type being not the target live-streaming type.

In some embodiments, the acquiring unit 801 is further configured to acquire at least one live-streaming start time point reported by the first user account, and a live-streaming end time point corresponding to each live-streaming start time point; the determining unit 805 is further configured to determine that the weight information passes verification in response to a live-streaming period corresponding to any piece of weight information reported by the first user account being within a period between any live-streaming start time point reported by the first user account and a live-streaming end time point corresponding to the live-streaming start time point; and the determining unit 805 is further configured to determine that the weight information does not pass verification in response to a live-streaming period corresponding to any piece of second weight information reported by the first user account being not within a period between any live-streaming start time point reported by the first user account and a live-streaming end time point corresponding to the live-streaming start time point.

In some embodiments, the dividing subunit 8021 is configured to determine a sum of the activity levels in the plurality of live-streaming periods, determine a second ratio of the activity level in each live-streaming period to the sum, and determine, based on a product of the second ratio corresponding to the live-streaming period and the target resource quantity, the second resource quantity corresponding to the live-streaming period.

In some embodiments, the acquiring unit 801 is configured to determine the activity level in each live-streaming period based on second behavior information in the live-streaming period, wherein the second behavior information describes an interactive operation performed on the virtual space by the second user accounts.

In some embodiments, the acquiring unit 801 is configured to perform at least one of: determining, based on a product of a quantity of likes contained in the second behavior information in each live-streaming period and a first value, the activity level in the live-streaming period; determining, based on a product of a quantity of transferred resources contained in the second behavior information in the live-streaming period and a second value, the activity level in the live-streaming period; and determining, based on a product of a quantity of comments contained in the second behavior information in the live-streaming period and a third value, the activity level in the live-streaming period.

In some embodiments, the acquiring unit 801 is configured to receive the activity level in each live-streaming period reported by any first user account among the plurality of first user accounts, wherein the activity level in the live-streaming period is determined by a first terminal logging in the first user account, based on the second behavior information in the live-streaming period, and the second behavior information describes the interactive operation performed on the virtual space by the second user accounts.

In some embodiments, the dividing subunit 8021 is configured to, for any live streaming period, generate the third resource quantity corresponding to each of the first user accounts in the live-streaming period by dividing the second resource quantity corresponding to the live-streaming period based on a total resource allocation weight corresponding to each of the first user accounts in the plurality of live-streaming periods.

In some embodiments, the dividing unit 802 is configured to determine a third ratio of the resource allocation weight corresponding to each first user account to a sum of the resource allocation weights corresponding to the plurality of first user accounts, and determine, based on a product of the third ratio corresponding to the first user account and the target resource quantity, the first resource quantity corresponding to the first user account.

In some embodiments, the acquiring unit 801 is configured to determine the resource allocation weight corresponding to each first user account based on first behavior information corresponding to the first user account, wherein the first behavior information describes an interactive operation between the second user accounts and the first user account.

In some embodiments, the acquiring unit 801 is configured to receive the resource allocation weight reported by each first user account, wherein the resource allocation weight corresponding to the first user account is determined by a first terminal logging the first user account, based on the first behavior information corresponding to the first user account, and the first behavior information describes an interactive operation between the second user accounts and the first user account.

FIG. 9 is a block diagram of an apparatus for allocating resources according to some embodiments of the present disclosure. As shown in FIG. 9, the apparatus includes: a determining unit 901, configured to determine, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and a reporting unit 902, configured to report the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

In some embodiments, the determining unit 901 is configured to, for any live-streaming period among a plurality of live-streaming periods, determine the resource allocation weight corresponding to the first user account in the live-streaming period based on first behavior information corresponding to the first user account in the live-streaming period in response to the first user account satisfying a valid live-streaming condition in the live-streaming period, wherein satisfying the valid live-streaming condition in the live-streaming period indicates that live-streaming data published by the first user account in the live-streaming period is a target live-streaming type and generate weight information of the first user account, wherein the weight information includes the resource allocation weight corresponding to the first user account in the live-streaming period; and the reporting unit 902 is configured to report the weight information of the first user account to the server, wherein the server is configured to generate a second resource quantity corresponding to each live-streaming period by dividing the target resource quantity based on activity levels of the virtual space in the plurality of live-streaming periods, generate a third resource quantity corresponding to each of the first user accounts in the virtual space in the live-streaming period by dividing the second resource quantity corresponding to the live-streaming period based on the weight information of the first user account and weight information of the other first user accounts in the virtual space, determine a first resource quantity corresponding to each of the first user accounts based on a sum of the third resource quantities corresponding to each of the first user accounts in the plurality of live-streaming periods, and allocate the resources of the target resource quantity to the first user accounts based on the first resource quantity corresponding to each of the first user accounts.

In some embodiments, the determining unit 901 is further configured to determine the live-streaming type of the live-streaming data published by the first user account into the virtual space in the live-streaming period by recognizing content of the live-streaming data published by the first user account into the virtual space in the live-streaming period.

In some embodiments, the determining unit 901 is further configured to determine the live-streaming type of the live-streaming data published by the first user account at a start time point by recognizing content of live-streaming data published by the first user account at the start time point of the live-streaming period; the determining unit 901 is further configured to determine the live-streaming type of the live-streaming data published by the first user account at an end time point by recognizing content of live-streaming data published by the first user account at the end time point of the live-streaming period; and the determining unit 901 is further configured to determine, in response to both the live-streaming type corresponding to the first user account at the start time point and the live-streaming type corresponding to the first user account at the end time point being the target live-streaming type, that the live-streaming data published by the first user account into the virtual space in the live-streaming period is the target live-streaming type.

In some embodiments, the determining unit 901 is further configured to determine activity levels in each live-streaming period based on second behavior information corresponding to the virtual space in the plurality of live-streaming periods, wherein the second behavior information describes an interactive operation performed on the virtual space by the second user accounts.

The reporting unit 902 is further configured to report the activity level in each live-streaming period to the server, wherein the server is configured to acquire the second resource quantity corresponding to the live-streaming period by dividing the target resource quantity based on the activity levels of the virtual space in the plurality of live-streaming periods, generate the third resource quantity corresponding to each first user account in the virtual space in the live-streaming period by dividing the second resource quantity corresponding to the live-streaming period based on the resource allocation weight corresponding to the first user account and the resource allocation weights corresponding to the other first user accounts in the virtual space, determine the first resource quantity corresponding to each of the first user accounts based on the sum of the third resource quantities corresponding to each of the first user accounts in the plurality of live-streaming periods, and allocate the resources of the target resource quantity to the first user accounts based on the first resource quantity corresponding to each of the first user accounts.

In some embodiments, an electronic device is further provided. The electronic device includes: at least one processor; and a volatile or nonvolatile memory configured to store at least one instruction executable by the at least one processor; wherein the at least one processor, when executing the at least one instruction, is caused to perform the above method for allocating resources.

In some embodiments, the electronic device is provided as a first terminal. FIG. 10 is a structural block diagram of a terminal 1000 according to some embodiments of the present disclosure. The terminal 1000 may be a portable mobile terminal, for example, a smartphone, a tablet computer, a moving picture experts group audio layer III (MP3) player, a moving picture experts group audio layer IV (MP4) player, a laptop computer, or a desktop computer. The terminal 1000 may also be referred to as user equipment, a portable terminal, a laptop terminal, a desktop terminal, or the like.

Generally, the terminal 1000 includes a processor 1001 and a memory 1002.

The processor 1001 may include one or more processing cores, such as a 4-core processor or an 8-core processor. The processor 1001 may be implemented by using at least one of the following hardware forms: digital signal processor (DSP), a field-programmable gate array (FPGA), and a programmable logic array (PLA). The processor 1001 may further include a main processor and a coprocessor. The main processor, also referred to as a central processing unit (CPU), is configured to process data in an awake state, and the coprocessor is a low-power processor configured to process data in a standby state. In some embodiments, the processor 1001 may be integrated with a graphics processing unit (GPU). The GPU is configured to be responsible for rendering and drawing content that a display needs to display. In some embodiments, the processor 1001 may further include an artificial intelligence (AI) processor. The AI processor is configured to process a calculation operation related to machine learning.

The memory 1002 may include one or more computer-readable storage media that may be non-transitory. The memory 1002 may further include a high-speed random access memory and a nonvolatile memory such as one or more magnetic disk storage devices and a flash storage device. In some embodiments, the non-transitory computer-readable storage medium in the memory 1002 is configured to store at least one piece of program code. The at least one piece of program code is executed by the processor 1001 to implement the method for allocating resources provided in the method embodiments of the present disclosure.

In some embodiments, the terminal 1000 may further optionally include a peripheral device interface 1003 and at least one peripheral device. The processor 1001, the memory 1002, and the peripheral device interface 1003 may be connected through a bus or a signal cable. Each peripheral device may be connected to the peripheral device interface 1003 through a bus, a signal cable, or a circuit board. Specifically, the peripheral device includes: at least one of a radio frequency (RF) circuit 1004, a display 1005, a camera component 1006, an audio circuit 1007, a positioning component 1008, and a power source 1009.

The peripheral device interface 1003 may be configured to connect at least one peripheral device related to input/output (I/O) to the processor 1001 and the memory 1002. In some embodiments, the processor 1001, the memory 1002, and the peripheral device interface 1003 are integrated into a same chip or circuit board; in some other embodiments, any one or two of the processor 1001, the memory 1002, and the peripheral device interface 1003 may be implemented on a separate chip or circuit board. This is not limited in this embodiment.

The RF circuit 1004 is configured to receive and transmit an RF signal, also referred to as an electromagnetic signal. The RF circuit 1004 communicates with a communications network and other communications devices by using the electromagnetic signal. The RF circuit 1004 converts an electric signal into an electromagnetic signal for transmission, or converts a received electromagnetic signal into an electric signal. In some embodiments, the RF circuit 1004 includes an antenna system, an RF transceiver, one or more amplifiers, a tuner, an oscillator, a digital signal processor, a codec chip set, a subscriber identity module card, and the like. The RF circuit 1004 may communicate with another terminal through at least one wireless communication protocol. The wireless communication protocol includes, but is not limited to: a world wide web (WWW), a metropolitan area network (MAN), an intranet, generations of mobile communications networks (2G, 3G, 4G, and 5G), a wireless local area network (LAN) and/or a wireless fidelity wirelessfidelity(Wi-Fi) network. In some embodiments, the RF circuit 1004 may further include a near-field communication (NFC) related circuit, and this is not limited in the present disclosure.

The display 1005 is configured to display a user interface (UI). The UI may include a graph, text, an icon, a video, and any combination thereof. In the case that the display 1005 is a touch display, the display 1005 is further capable of collecting a touch signal on or above a surface of the display 1005. The touch signal may be inputted as a control signal to the processor 1001 for processing. In this case, the display 1005 may be further configured to provide a virtual button and/or a virtual keyboard, which is also referred to as a soft button and/or a soft keyboard. In some embodiments, there may be one display 1005, disposed on a front panel of the terminal 1000. In some other embodiments, there may be at least two displays 1005, disposed on different surfaces of the terminal 1000 or in a folded design. In some other embodiments, the display 1005 may be a flexible display, disposed on a curved surface or a folded surface of the terminal 1000. Even, the display 1005 may be further disposed in a non-rectangular irregular pattern, namely, a special-shaped screen. The display 1005 may be made of a liquid crystal display (LCD), an organic light emitting diode (OLED), or other materials.

The camera component 1006 is configured to collect images or videos. In some embodiments, the camera component 1006 includes a front-facing camera and a rear-facing camera. Generally, the front-facing camera is disposed on the front panel of the terminal, and the rear-facing camera is disposed on a back surface of the terminal. In some embodiments, there are at least two rear-facing cameras, each of which is any one of a main camera, a depth-of-field camera, a wide-angle camera, and a telephoto camera, to implement a background blurring function by fusing the main camera and the depth-of-field camera, and panoramic shooting and virtual reality (VR) shooting functions or other fusing shooting functions by fusing the main camera and the wide-angle camera. In some embodiments, the camera component 1006 may further include a flash. The flash may be a single-color temperature flash or a doublecolor temperature flash. The double color temperature flash refers to a combination of a warm light flash lamp and a cold light flash lamp, which may be used for light compensation under different color temperatures.

The audio circuit 1007 may include a microphone and a speaker. The microphone is configured to collect sound waves of a user and an environment, and convert the sound waves into electric signals and input the electrical signals into the processor 1001 for processing, or input the electrical signals into the RF circuit 1004 for voice communication. For the purpose of stereo collection or noise reduction, there may be a plurality of microphones, disposed at different parts of the terminal 1000. The microphone may alternatively be an array microphone or an omnidirectional collection microphone. The speaker is configured to convert the electric signal from the processor 1001 or the RF circuit 1004 into a sound wave. The speaker may be a conventional thin-film speaker or a piezoelectric ceramic speaker. In the case that the speaker is the piezoelectric ceramic speaker, an electric signal not only can be converted into a sound wave audible to human, but also can be converted into a sound wave inaudible to human for ranging and other purposes. In some embodiments, the audio circuit 1007 may further include an earphone jack.

The positioning component 1008 is configured to position a current geographic location of the terminal 1000, to implement a navigation or a location based service (LBS). The positioning component 1008 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power supply 1009 is configured to supply power for various components in the terminal 1000. The power supply 1009 may be an alternating current, a direct current, a disposable battery, or a rechargeable battery. In the case that the power supply 1009 includes the rechargeable battery, the rechargeable battery may be a wired rechargeable battery or a wireless rechargeable battery. The wired rechargeable battery is a battery charged through a wired circuit, and the wireless rechargeable battery is a battery charged through a wireless coil. The rechargeable battery may be further configured to support a fast charge technology.

In some embodiments, the terminal 1000 further includes one or more sensors 1010. The one or more sensors 1010 include, but are not limited to: an acceleration sensor 1011, a gyroscope sensor 1012, a force sensor 1013, a fingerprint sensor 1014, an optical sensor 1015, and a proximity sensor 1016.

The acceleration sensor 1011 may detect acceleration on three coordinate axes of a coordinate system established by the terminal 1000. For example, the acceleration sensor 1011 may be configured to detect components of gravity acceleration on the three coordinate axes. The processor 1001 can control, based on a gravity acceleration signal collected by the acceleration sensor 1011, the touch display 1005 to display the UI in a landscape view or a portrait view. The acceleration sensor 1011 may be further configured to collect game or user motion data.

The gyroscope sensor 1012 can detect a body direction and a rotation angle of the terminal 1000. The gyroscope sensor 1012 may cooperate with the acceleration sensor 1011 to collect a 3D motion performed by the user on the terminal 1000. The processor 1001 can implement the following functions based on the data collected by the gyroscope sensor 1012: motion sensing (such as changing the UI based on a tilt operation of the user), image stabilization at shooting, game control, and inertial navigation.

The force sensor 1013 may be disposed on a side frame of the terminal 1000 and/or a lower layer of the display 1005. In the case that the force sensor 1013 is disposed on the side frame of the terminal 1000, a holding signal of the user on the terminal 1000 may be detected. The processor 1001 performs left and right hand recognition or a quick operation based on the holding signal collected by the force sensor 1013. In the case that the force sensor 1013 is disposed on the lower layer of the touch display 1005, the processor 1001 controls an operable control on the UI based on a pressure operation of the user on the touch display 1005. The operable control includes at least one of a button control, a scroll bar control, an icon control and a menu control.

The fingerprint sensor 1014 is configured to collect a user's fingerprint, and the processor 1001 identifies the user's identity based on the fingerprint collected by the fingerprint sensor 1014, or the fingerprint sensor 1014 identifies the user's identity based on the collected fingerprint. In the case that the user's identity recognized as a trusted identity, the processor 1001 authorizes the user to perform a related sensitive operation. The sensitive operation includes unlocking a screen, viewing encrypted information, downloading software, payment, changing settings, and the like. The fingerprint sensor 1014 may be disposed on a front surface, a back surface, or a side surface of the terminal 1000. In the case that the terminal 1000 is provided with a physical button or a vendor logo, the fingerprint sensor 1014 may be integrated with the physical button or the vendor logo.

The optical sensor 1015 is configured to collect ambient light intensity. In an embodiment, the processor 1001 may control display brightness of the display 1005 based on the ambient light intensity collected by the optical sensor 1015. Specifically, in the case that the ambient light intensity is relatively high, the display brightness of the display 1005 is turned up. In the case that the ambient light intensity is relatively low, the display brightness of the display 1005 is turned down. In another embodiment, the processor 1001 may further dynamically adjust a camera parameter of the camera component 1006 based on the ambient light intensity collected by the optical sensor 1015.

The proximity sensor 1016, also referred to as a distance sensor, is usually disposed on the front panel of the terminal 1000. The proximity sensor 1016 is configured to collect a distance between the user and the front surface of the terminal 1000. In an embodiment, when the proximity sensor 1016 detects that the distance between the user and the front surface of the terminal 1000 gradually becomes smaller, the display 1005 is controlled by the processor 1001 to switch from a screen-on state to a screen-off state. In the case that the proximity sensor 1016 detects that the distance between the user and the front surface of the terminal 1000 gradually becomes larger, the display 1005 is controlled by the processor 1001 to switch from the screen-off state to the screen-on state.

A person skilled in the art may understand that the structure shown in FIG. 10 does not constitute a limitation to the terminal 1000, and the terminal may include more or fewer components than those shown in the figure, or some components may be combined, or a different component deployment may be used.

In some embodiments, the electronic device is provided as a server. FIG. 11 is a structural block diagram of a server 1100 according to some embodiments of the present disclosure. The server 1100 may vary greatly due to different allocations or performance and may include one or more central processing units (CPU) 1101 and one or more memories 1102, wherein the one memory 1102 stores at least one piece of program code, and the at least one piece of program code is loaded and executed by the CPU 1101 to implement the method for allocating resources provided in the method embodiments described above. The server may also have components such as a wired or wireless network interface, a keyboard, and an input/output interface, for input and output. The server may further include other components for implementing the functions of the device, which are not described herein again.

In some embodiments, a non-transitory computer-readable storage medium is further provided. When program code in the storage medium is executed by a processor of an electronic device, the electronic device is caused to perform the processes performed by the electronic device in the method for allocating resources described above. In some embodiments, the storage medium may be a non-transitory computer-readable storage medium, for example, the non-transitory computer-readable storage medium may be a read-only memory (ROM), a random access memory (RAM), a compact disc read-only memory (CD-ROM), a magnetic tape, a floppy disk, an optical data storage device, or the like.

In some embodiments, a computer program product is further provided. When an instruction in the computer program product is executed by a processor of an electronic device, the electronic device is caused to perform the processes performed by the terminal or server in the method for allocating resources described above.

All embodiments of the present disclosure may be performed alone or in combination with other embodiments, all of which are considered to be within the scope of protection claimed by the present disclosure.

**Claims**

1. A method for allocating resources in a virtual space, comprising:

   acquiring (201) resource allocation weights corresponding to a plurality of first user accounts in the virtual space, wherein a resource allocation weight indicates a contribution degree of virtual-space behaviors of an individual first user account of the first user accounts to the virtual space and represent interactions between the first user accounts and second user accounts, and wherein the first user accounts are configured to publish live-streaming data into the virtual space for co-hosting, and the second user accounts are configured to watch the live-streaming data in the virtual space and interact with the first user accounts in the virtual space;
   generating (202) a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and
   allocating (203), based on the first resource quantity corresponding to each of the first user accounts, the resources of the target resource quantity to the plurality of first user accounts.

2. The method according to claim 1, wherein said generating (202) the first resource quantity corresponding to each of the first user accounts by dividing the target resource quantity corresponding to the virtual space based on the resource allocation weights corresponding to the plurality of first user accounts comprises:

   generating a second resource quantity corresponding to each live-streaming period by dividing the target resource quantity based on activity levels of the virtual space in a plurality of live-streaming periods, wherein the activity level indicates a degree of activity of the second user accounts in the virtual space;
   generating a third resource quantity corresponding to each of the first user accounts in the live-streaming period by dividing the second resource quantity corresponding to the live-streaming period based on the resource allocation weights corresponding to the plurality of first user accounts; and
   determining the first resource quantity corresponding to each of the first user accounts based on a sum of the third resource quantities corresponding to each of the first user accounts in the plurality of live-streaming periods.

3. The method according to claim 2, wherein said generating the third resource quantity corresponding to each of the first user accounts in each live-streaming period by dividing the second resource quantity corresponding to the live-streaming period based on the resource allocation weights corresponding to the plurality of first user accounts comprises:

   for any live-streaming period among the plurality of live-streaming periods, determining a sum of the resource allocation weights corresponding to the plurality of first user accounts in the live-streaming period based on the resource allocation weights corresponding to the plurality of first user accounts;
   determining a first ratio of the resource allocation weight of each of the first user accounts in the live-streaming period to the sum; and
   determining the third resource quantity corresponding to each of the first user accounts in the live-streaming period based on a product of the first ratio corresponding to each of the first user accounts and the second resource quantity corresponding to the live-streaming period.

4. The method according to claim 3, further comprising:

for any first user account and any live-streaming period, determining a live-streaming type of the live-streaming data published by the first user account into the virtual space in the live-streaming period; determining the resource allocation weight corresponding to the first user account in the live-streaming period based on first behavior information corresponding to the first user account in the live-streaming period in response to the live-streaming type being a target live-streaming type, wherein the first behavior information describes an interactive operation between the second user accounts and the first user account, wherein the target live-streaming type is a live-streaming type indicating that a live streamer contained in corresponding live-streaming data is performing an interaction with the second user accounts; or determining the resource allocation weight corresponding to the first user account in the live-streaming period based on a target value in response to the live-streaming type being not the target live-streaming type.

5. The method according to claim 4, wherein, in the case that the first behavior information corresponding to any first user account in any live-streaming period includes a quantity of likes and/or a quantity of transferred resources, said determining the resource allocation weight corresponding to the first user account in the live-streaming period based on the first behavior information corresponding to the first user account in the live-streaming period comprises at least one of:

determining the resource allocation weight corresponding to the first user account in the live-streaming period based on a product of the quantity of likes contained in the first behavior information and a first weight; or determining the resource allocation weight corresponding to the first user account in the live-streaming period based on a product of the quantity of transferred resources contained in the first behavior information and a second weight.

6. The method according to claim 4, wherein said determining the live-streaming type of the live-streaming data published by the first user account into the virtual space in the live-streaming period comprises: determining the live-streaming type of the live-streaming data by recognizing content of the live-streaming data published by the first user account into the virtual space in the live-streaming period.

7. The method according to claim 4, further comprising: for any first user account among the plurality of first user accounts, receiving weight information reported by the first user account, wherein the weight information comprises the resource allocation weight corresponding to the first user account in a live-streaming period satisfying a valid live-streaming condition, the live-streaming period satisfying the valid live-streaming condition means that the live-streaming data published by the first user account within the live-streaming period is the target live-streaming type, and the weight information is determined, based on first behavior information corresponding to the first user account in any live-streaming period, by a first terminal logging in the first user account in response to the first user account satisfying the valid live-streaming condition in the live-streaming period, and the first behavior information describes an interactive operation between the second user accounts and the first user account.

8. The method according to claim 7, further comprising:

screening out the weight information for weight information that has passed verification from a plurality of pieces of weight information reported by the first user account; and determining the resource allocation weight corresponding to the first user account in at least one live-streaming period based on the weight information that has passed verification.

9. The method according to claim 7, further comprising:

determining, among the plurality of live-streaming periods, other live-streaming periods in which a valid live-streaming condition corresponding to the first user account is not satisfied; and determining the resource allocation weight corresponding to the first user account in the other live-streaming periods based on a target value.

10. The method according to claim 8, further comprising:

for any piece of weight information reported by the first user account, determining a live-streaming type of the live-streaming data published by the first user account into the virtual space in the live-streaming period by recognizing content of the live-streaming data published by the first user account into the virtual space in the live-streaming period corresponding to the weight information;

determining that the weight information passes verification in response to the live-streaming type being the target live-streaming type; and

determining that the weight information does not pass verification in response to the live-streaming type being not the target live-streaming type.

11. The method according to claim 8, further comprising:

acquiring at least one live-streaming start time point reported by the first user account, and a live-streaming end time point corresponding to each live-streaming start time point;

determining that the weight information passes verification in response to a live-streaming period corresponding to any piece of weight information reported by the first user account being within a period between any live-streaming start time point reported by the first user account and a live-streaming end time point corresponding to the live-streaming start time point; and

determining that the weight information does not pass verification in response to a live-streaming period corresponding to any piece of weight information reported by the first user account being not within a period between any live-streaming start time point reported by the first user account and a live-streaming end time point corresponding to the live-streaming start time point.

12. The method according to any one of claims 2 to 11, wherein said generating the second resource quantity corresponding to each live-streaming period by dividing the target resource quantity based the activity levels of the virtual space in the plurality of live-streaming periods comprises:

determining a sum of the activity levels in the plurality of live-streaming periods;

determining a second ratio of the activity level in each live-streaming period to the sum; and

determining the second resource quantity corresponding to the live-streaming period based on a product of the second ratio corresponding to the live-streaming period and the target resource quantity.

13. A method for allocating resources in a virtual space, comprising:

determining (301), based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space and represents interactions between the first user account and second user accounts, and wherein the first user account is configured to publish live-streaming data into the virtual space for co-hosting and the second user accounts are configured to watch the live-streaming data in the virtual space and interact with the first user account in the virtual space; and

reporting (302) the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

14. An apparatus for allocating resources, comprising:

an acquiring unit (701), configured to acquire resource allocation weights corresponding to a plurality of first user accounts in a virtual space, wherein the resource allocation weight indicates a contribution degree of virtual-space behaviors of the first user accounts to the virtual space;

a dividing unit (702), configured to generate a first resource quantity corresponding to each of the first user accounts by dividing a target resource quantity corresponding to the virtual space based on the resource allocation weights corresponding to the plurality of first user accounts, wherein the target resource quantity is a quantity of resources posted by the second user accounts in the virtual space; and

an allocating unit (703), configured to allocate, based on the first resource quantity corresponding to each of the first user accounts, the resources of the target resource quantity to the plurality of first user accounts.

**15.** An apparatus for allocating resources, comprising:

a determining unit (901), configured to determine, based on first behavior information corresponding to a first user account currently logged-in, a resource allocation weight corresponding to the first user account, wherein the first behavior information describes an interactive operation between the first user account and second user accounts in a virtual space, and the resource allocation weight indicates a contribution degree of virtual-space behaviors of the first user account to the virtual space; and
a reporting unit (902), configured to report the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space, and the target resource quantity is a quantity of resources posted by the second user accounts in the virtual space.

FIG. 1

| Acquiring, by a server, resource allocation weights corresponding to a plurality of first user accounts in a virtual space | ⟳201 |
| Generating, by the server, a first resource quantity corresponding to each of the first user accounts by dividing a target resource quantity corresponding to the virtual space based on the resource allocation weights corresponding to the plurality of first user accounts | ⟳202 |
| Allocating, by the server, resources of the target resource quantity to the plurality of first user accounts based on the first resource quantity corresponding to each of the first user accounts | ⟳203 |

FIG. 2

| Determining, by a first terminal based on first virtual-space behavior information corresponding to a first user account currently logged-in, a resource allocation weight corresponding to the first user account | ⟳301 |
| Reporting, by the first terminal, the resource allocation weight corresponding to the first user account to a server, wherein the server is configured to allocate resources of a target resource quantity corresponding to the virtual space based on the resource allocation weight corresponding to the first user account and resource allocation weights corresponding to other first user accounts in the virtual space | ⟳302 |

FIG. 3

| Acquiring, by a server, resource allocation weights corresponding to a plurality of first user accounts in a virtual space | ⟳401 |
| Acquiring, by the server, activity levels in the plurality of live-streaming periods | ⟳402 |
| Generating, by the server based on the active levels of the virtual space in the plurality of live-streaming periods, a second resource quantity corresponding to each live-streaming period by dividing the target resource quantity corresponding to the virtual space | ⟳403 |
| For any live-streaming period among the plurality of live-streaming periods, generating, by the server, a third resource quantity corresponding to each of the first user accounts in each live-streaming period by dividing second resource quantity corresponding to the live-streaming period based on resource allocation weights corresponding to the plurality of first user accounts in the live-streaming period | ⟳404 |
| Determining, by the server, the first resource quantity corresponding to each of the first user accounts based on a sum of the third resource quantities corresponding to each of the first user accounts in the plurality of live-streaming periods | ⟳405 |
| Allocating, by the server, resources of the target resource quantity to the plurality of first user accounts based on the first resource quantity corresponding to each of the first user accounts | ⟳406 |

FIG. 4

| Liver streamer account 1 joins live streaming | Liver streamer account 2 joins live streaming | Liver streamer account 3 joins live streaming | Liver streamer account 1 joins live streaming |
|---|---|---|---|

Start live streaming in a live-streaming room

Start live streaming in a live-streaming room

| | Liver streamer account 1 exits live streaming | Liver streamer account 3 exits live streaming | Liver streamer account 2 exits live streaming | Liver streamer account 1 exits live streaming |
|---|---|---|---|---|

Time length of live streaming by the liver streamer account 1 for the first time

Time length of live streaming by the liver streamer account 1 for the second time

FIG. 5

Join live streaming → Live streaming → Exit live streaming

ARM

FRM

BRM

Live content recognition system

Independent-account settlement system ↔ Interactive information

Periodic reporting

Report a live-streaming start time point

Report a live-streaming end time point

Live-streaming server

FIG. 6

Acquiring unit — 701

Dividing unit — 702

Allocating unit — 703

FIG. 7

27

| Recognizing unit | 706 |
| Determining unit | 705 |
| Screening unit | 704 |

Second determining subunit 7011

Acquiring unit 701

Dividing subunit 7021

First determining subunit 7022

Dividing unit 702

| Allocating unit | 703 |

FIG. 8

| Determining unit | 901 |
| Reporting unit | 902 |

FIG. 9

1000

Processor 1001

Memory 1002

Peripheral device interface 1003

RF circuit 1004

Display 1005

Camera component 1006

Audio circuit 1007

Positioning component 1008

Power supply 1009

| Acceleration sensor 1101 | Gyroscope sensor 1012 | Pressure sensor 1013 |
| Fingerprint sensor 1014 | Optical sensor 1015 | Proximity sensor 1016 |

Sensors 1010

FIG. 10

1100

Server

Processor 1101

Memory 1102

FIG. 11

## EUROPEAN SEARCH REPORT

**Application Number**

EP 22 16 0890

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 351 298 A (TENCENT TECH SHENZHEN CO LTD) 9 February 2021 (2021-02-09) * the whole document * ----- | 1-15 | INV. H04N21/2187 |

TECHNICAL FIELDS SEARCHED (IPC)

H04N

The present search report has been drawn up for all claims

| Place of search | Date of completion of the search | Examiner |
|---|---|---|
| The Hague | 15 July 2022 | Dewyn, Torkild |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 0890

This annex lists the patent family members relating to the patent documents cited in  the above-mentioned European search report.
The members are as contained in the European Patent Office EDP file on
The European Patent Office is in no way liable for these particulars which are merely given for the purpose of information.

15-07-2022

| Patent document cited in search report | Publication date | Patent family member(s) | Publication date |
|---|---|---|---|
| CN 112351298 A | 09-02-2021 | NONE | |

EPO FORM P0459